(19) Europäisches Patentamt
European Patent Office
Office européen des brevets

(11) **EP 4 411 349 A1**

(12) **EUROPEAN PATENT APPLICATION**

(43) Date of publication:
**07.08.2024 Bulletin 2024/32**

(51) International Patent Classification (IPC):
***G01N 21/65*** (2006.01)

(21) Application number: **23305149.9**

(52) Cooperative Patent Classification (CPC):
**G01N 21/65;** G01N 2201/12

(22) Date of filing: **03.02.2023**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Merck Patent GmbH
64293 Darmstadt (DE)**

(72) Inventors:
• **PUGET, Renaud
38190 Bernin (FR)**

• **THOMAS, Fabrice
38400 Saint Martin D'Heres (FR)**
• **DUCHEMIN, Céline
38330 Montbonnot Saint Martin (FR)**
• **SANCHEZ, Célia
38000 Grenoble (FR)**
• **JOURDAINNE, Laurent
67370 Stutzheim Offenheim (FR)**

(74) Representative: **Haseltine Lake Kempner LLP
Cheapside House
138 Cheapside
London EC2V 6BJ (GB)**

(54) **REDUCTION OF STRAY LIGHT NOISE IN OPTICAL RAMAN PROBE SENSORS**

(57) A system and method for quantifying the stray light that enters a Raman optical sensor and removes this from the Raman spectrum is disclosed. One or more background noise measurements are performed by the Raman analyzer wherein the laser is disabled during these background noise measurements. One or more traditional signal acquisition measurements are then performed. The results from the background noise measurements and the traditional signal acquisition measurement are then processed. This results in a clean spectrum, where the background noise has been significantly reduced. In some embodiments, background noise measurements are performed before and after the traditional signal acquisition measurement and these noise measurements are averaged.

FIG. 2

EP 4 411 349 A1

## Description

### FIELD

Embodiments of the present disclosure relate to systems and methods to reduce stray light noise in optical Raman probe sensors.

### BACKGROUND

In many applications, such as bioprocessing applications, it is important to carefully and accurately monitor the composition of materials. For example, in a bioreactor, it may be important to monitor the amounts of various molecules, such as glucose, lactate, glutamine, ammonium and others.

In many situations, this monitoring may be done using Raman spectroscopy. In Raman spectroscopy, a laser is used to direct light at a specific wavelength toward a target molecule. A photon reaches a molecule and excites it. Once the photon excites the molecule, there are several possible results. The most common is that the excitation is temporary and the molecule returns to its initial energy state. In this mode, the photon is scattered or redirected due to the interaction with the molecule. Further, the wavelength of the photon is unchanged since none of its energy was absorbed by the molecule. This phenomenon is referred to as Rayleigh scattering and does not provide any information about the molecule being analyzed.

In another mode, the molecule is excited by the photon and moves to a different vibrational or rotational state. If that new state is a higher energy state than the original energy state, then the photon loses energy, which results in a lower frequency. In this way, the total amount of energy is conserved. This mode is referred to as Stokes Raman scattering.

If that new state is a lower energy state than the original energy state, then the photon gains energy, which results in a higher frequency. This mode is referred to as anti-Stokes Raman scattering.

The Stokes Raman scattering and anti-Stokes Raman scattering may be used to generate a spectrum. This spectrum is usually displayed having a horizontal axis corresponding to wavenumber, which is typically defined as: $\frac{1}{\lambda_0} - \frac{1}{\lambda_1}$ , where $\lambda_0$ is the wavelength of the laser and $\lambda_1$ is the wavelength of the Raman scattered light. The vertical axis is used to represent intensity.

Importantly, each molecule, when excited, produces a unique spectrum that may be used to identify that molecule. Thus, the presence of different molecules may be determined using this approach.

The percentage of Stokes-Raman scattering as compared to Rayleigh scattering is very low and highly sensitive to noise. For example, ambient light from the sun or interior lighting may alter the Raman spectrum.

Therefore, it would be advantageous if there were a system and method for reducing the effect of stray light noise that enters an optical Raman probe sensor on the Raman spectrum.

### SUMMARY

A system and method for quantifying the stray light that enters a Raman optical sensor and removes this from the Raman spectrum is disclosed. One or more background noise measurements are performed by the Raman analyzer wherein the laser is disabled during these background noise measurements. One or more traditional signal acquisition measurements are then performed. The results from the background noise measurements and the traditional signal acquisition measurement are then processed. This results in a clean spectrum, where the background noise has been significantly reduced. In some embodiments, background noise measurements are performed before and after the traditional signal acquisition measurement and these background noise measurements are averaged.

According to one embodiment, a method of measuring Raman scattering is disclosed. The method comprises performing one or more noise acquisition measurements using a Raman analyzer, wherein the one or more noise acquisition measurements are performed while a laser within the Raman analyzer is disabled; performing one or more Raman signal acquisition measurements to create a Raman spectrum, wherein the Raman signal acquisition measurement is performed while the laser within the Raman analyzer is enabled; averaging the one or more noise acquisition measurements to create an average background noise spectrum; and processing the average background noise spectrum and the Raman spectrum to create a clean Raman spectrum. In some embodiments, the average background noise spectrum is subtracted from the Raman spectrum to create the clean Raman spectrum. In some embodiments, more than one Raman signal acquisition measurement is performed and results from the more than one Raman signal acquisition measurements are averaged to create the Raman spectrum. In some embodiments, at least one of the one or more noise acquisition measurements is performed before the Raman signal acquisition measurement. In some embodiments, at least one of the one or more noise acquisition measurements is performed after the Raman signal acquisition measurement. In some embodiments, more than one noise acquisition measurement is performed, and at least one of the noise acquisition measurements is performed before the Raman signal acquisition measurement and at least one of the noise acquisition measurements is performed after the Raman signal acquisition measurement.

According to another embodiment, a system for measuring Raman scattering is disclosed. The system comprises an optical Raman probe sensor; a Raman analyzer, comprising an optical detector and a laser, the Raman analyzer in communication with the optical Raman probe sensor via a conduit; and a controller, wherein the controller: disables the laser and performs one or more noise acquisition measurements; enables the laser and performs one or more Raman signal acquisition measurements to generate a Raman spectrum; averages the one or more noise acquisition measurements to generate a noise spectrum; and processes the noise spectrum and the Raman spectrum to create a clean Raman spectrum. In some embodiments, the controller subtracts the noise spectrum from the Raman spectrum to create the clean Raman spectrum. In some embodiments, more than one Raman signal acquisition measurements are performed and the controller averages results from more than one Raman signal acquisition measurements to create the Raman spectrum. In some embodiments, the controller performs at least one of the one or more noise acquisition measurements before the Raman signal acquisition measurement. In some embodiments, the controller performs at least one of the one or more noise acquisition measurements after the Raman signal acquisition measurement. In some embodiments, the controller performs more than one noise acquisition measurement, and at least one of the noise acquisition measurements is performed before the Raman signal acquisition measurement and at least one of the noise acquisition measurements is performed after the Raman signal acquisition measurement.

## BRIEF DESCRIPTION OF THE FIGURES

For a better understanding of the present disclosure, reference is made to the accompanying drawings, which are incorporated herein by reference and in which:

FIG. 1 illustrates a bioreactor that includes a Raman probe sensor;
FIG. 2 shows the sequence of operations to create the clean Raman spectrum; and
FIG. 3 shows the effect that the disclosed method has on the resulting Raman spectrum.

## DETAILED DESCRIPTION

Embodiments of the present disclosure describe the system and method for reducing stray light noise used in the generation of a Raman spectrum.

In many applications, such as bioprocessing applications, it is important to carefully and accurately monitor the materials within the bioreactor.

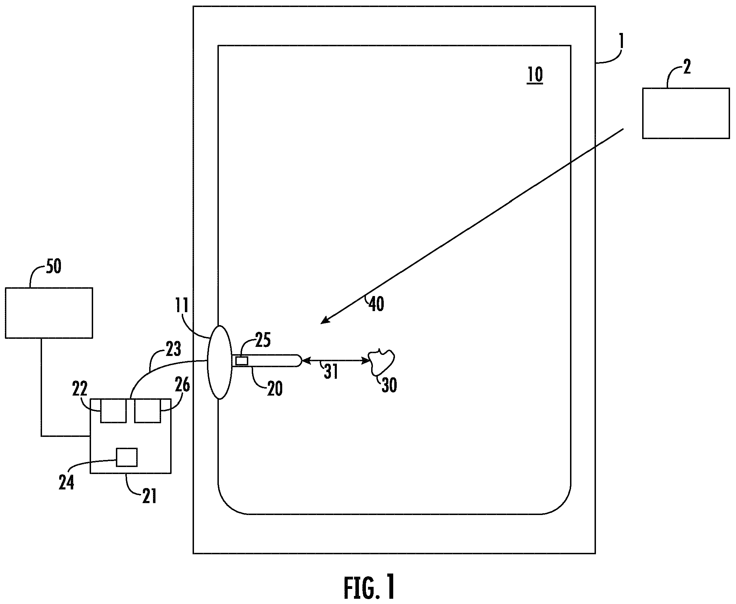

FIG. 1 shows a representative bioreactor 1. The bioreactor 1 may be controlled by a bioreactor controller 2. The bioreactor controller 2 may control the various valves, spargers, impellers and other functions of the bioreactor 1.

A bioreactor bag 10 is typically inserted in the bioreactor 1. The bioreactor bag 10 may have a plurality of ports to allow the introduction of various sensors, actuators, spargers or other mechanisms into the interior of the bioreactor bag 10. In this illustration, the optical Raman probe sensor 20 enters the interior of the bioreactor bag 10 through port 11. The optical Raman probe sensor 20 includes a tube with a sapphire window. The optical Raman probe sensor 20 also includes a connection thread that is compatible with bioreactors, such as PG13.5. In some embodiments, the tube of the optical Raman probe sensor 20 has a maximum external diameter of 12 mm. The optical Raman probe sensor 20 is immersed in the material contained within the bioreactor bag 10. The optical Raman probe sensor 20 projects a laser beam along an optical axis 31. The laser beam passes through the tube, the sapphire window and into the bioreactor bag 10. The optical Raman probe sensor 20 also receives scattering light from a target 30, which may be a molecule or group of molecules. The scattering light travels along a collection field of view, and enters the tip of the optical Raman probe sensor 20. The optical Raman probe sensor 20 may include an optical assembly 25 of lenses and filters, to collect the optical signals from the target 30.

The optical Raman probe sensor 20 is connected with a Raman analyzer 21, which is exterior to the bioreactor 1, using a conduit 23. The Raman analyzer 21 may include a laser 22, which generates a laser beam that travels through a conduit 23 to the optical Raman probe sensor 20. This conduit 23 may be a fiberoptic cable. The Raman analyzer 21 may include an optical detector 26, which may include a CCD or photodetector. The Raman analyzer 21 also includes a processing unit 24 to control the laser 22 and interpret the output from the optical detector 26.

A controller 50 may be in communication with the Raman analyzer 21. The controller may include a processing unit and an associated memory device. The processing unit may be any suitable component, such as a microprocessor, embedded processor, an application specific circuit, a programmable circuit, a microcontroller, or another similar device. This memory device contains the instructions, which, when executed by the processing unit, enable the controller 50 to perform the functions described herein. This memory device may be a non-volatile memory, such as a FLASH ROM, an electrically erasable ROM or other suitable devices. In other embodiments, the memory device may be a volatile memory, such as a RAM or DRAM, or any non-transitory computer readable storage media.

The controller 50 may receive data from the Raman analyzer 21 and provide commands or instructions to the Raman analyzer 21. In the embodiment shown in FIG. 1, the controller 50 is separate from the Raman analyzer 21. However, in other embodiments, these two components may be combined. In other embodiments, the controller 50 may transmit processed data to the bioreactor controller 2.

As noted above, Stokes Raman scattering occurs much less frequently than Rayleigh scattering, and is consequently very sensitive to noise. Therefore, ambient light 40 that enters the optical Raman probe sensor 20 may adversely the accuracy of the detection. This ambient light may be sunlight, moonlight, room lighting or other types of lighting. One way to address this is to quantify the amount of ambient light that enters the optical Raman probe sensor 20 and remove this background noise component from the Raman spectrum.

In normal operation, the Raman analyzer 21 enables a laser 22 that is disposed in the Raman analyzer 21. Light from the laser 22 travels to the optical Raman probe sensor 20 via the conduit 23. The light from the laser 22 causes molecules in the optical axis 31 of the laser 22 to become excited, producing Rayleigh scattering, Stokes Raman scattering and anti-Stokes Raman scattering. The light that is then received by the optical assembly 25 of the optical Raman probe sensor 20. The data from the optical Raman probe sensor 20 is then transmitted to the optical detector 26 disposed within the Raman analyzer 21, which may generate the Raman spectrum. This process may be referred to as a Raman signal acquisition measurement and the result of this process may be referred to as a Raman spectrum.

In another mode, the Raman analyzer 21 does not enable the laser 22. However, as before, data from the optical Raman probe sensor 20 is transmitted to the Raman analyzer 21, which may create the Raman spectrum. In this mode, any signal received by the optical detector 26 in the Raman analyzer 21 through the optical Raman probe sensor 20 is the result of background noise. Thus, this process is referred to as a background noise acquisition measurement and the result of this process may be referred to a background noise spectrum.

These two processes may be combined to generate a clean Raman spectrum.

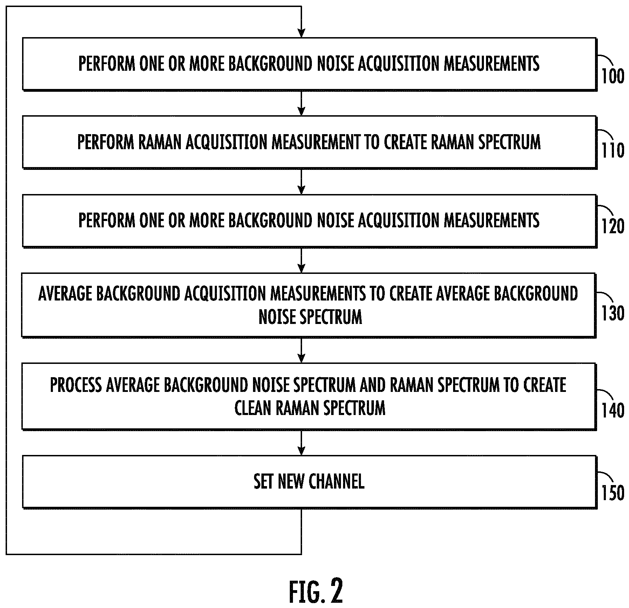

Specifically, FIG. 2 shows a flowchart illustrating the operation of the controller 50 and the Raman analyzer 21. First, as shown in Box 100, one or more background noise acquisition measurements may be performed. In certain embodiments, the number of background noise acquisition measurements may be as large as 100. In other embodiments, a smaller number of background noise acquisition measurements may be performed. As noted above, this process is performed while the laser 22 is disabled.

Next, as shown in Box 110, one or more Raman acquisition measurements are performed. As described above, this involves enabling the laser 22 and detecting the emitted optical signals using the optical detector 26. The Raman analyzer 21 may then create a Raman spectrum from the output of the optical detector 26. In some embodiments, a plurality of Raman acquisition measurements are performed to create the Raman spectrum. In some embodiments, 10 or more Raman acquisition measurements are performed.

Next, as shown in Box 120, one or more background noise acquisition measurements may be performed after the Raman signal acquisition measurement is performed. In certain embodiments, as was done with the background noise acquisition measurement that were performed before the Raman signal acquisition measurement, the number of background noise acquisition measurements may be as large as 100. In other embodiments, a smaller number of background noise acquisition measurements may be performed. In other embodiments, no background noise acquisition measurements may be performed after Raman acquisition measurement.

Next, as shown in Box 130, the background noise spectrums obtained from the background noise acquisition measurements may be averaged together and used to create an average background noise spectrum. In certain embodiments, background noise spectrums are generated from background noise acquisition measurements taken before the Raman signal acquisition measurement and background noise acquisition measurements taken after the Raman signal acquisition measurement. In other embodiments, background noise acquisition measurements are only performed before or after the Raman signal acquisition measurement. In these embodiments, one of Box 100 or Box 120 may be omitted.

In Box 140, the average background noise spectrum and the Raman spectrum are processed to create a clean Raman spectrum, which has reduced background noise. In certain embodiments, the average background noise spectrum is subtracted from the Raman spectrum to create the clean Raman spectrum. In other embodiments, other denoising algorithms may utilize the background noise spectrums and the Raman spectrum to create the clean Raman spectrum.

The operations described in Boxes 130 and 140 may be performed using the controller 50 or a different controller. For example, a different controller that is part of the same network as the Raman analyzer 21 may be used to perform these operations.

If there are multiple channels that are being analyzed, the new channel is set, as shown in Box 150, and the sequence is repeated.

The clean Raman spectrum can be used in many ways. For example, the clean Raman spectrum may be processed and analyzed by mathematical advanced tools in order to determine the composition of the medium contained in the bioreactor bag 10.

The embodiments described above in the present application may have many advantages.

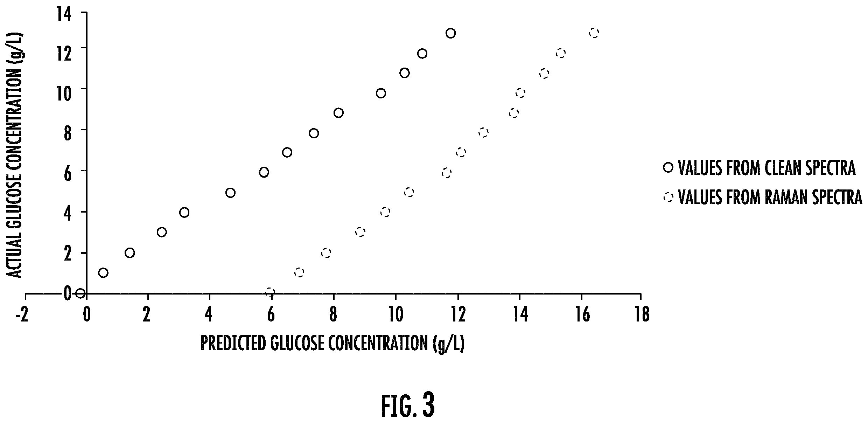

In many applications, the optical Raman probe sensor 20 is disposed in glass bioreactors or in plastic bioreactor bags that are not fully opaque to ambient light. As a result, when Raman spectra are generated, the ambient light may affect the results. In one experiment, varying concentrations of glucose, from 0 to 13 g/L, were added to a bioreactor. At each concentration, Raman measurements were performed. A first set of the Raman measurements were performed with ambient light entering the bioreactor. These Raman measurements were then processed in the traditional manner, resulting in the data points in FIG. 3 labelled "Data from Raman Spectra". These data points are the predicted glucose concentration based on the Raman spectra. Note that there is a large offset between the actual glucose concentration and the glucose concentration predicted based on the Raman spectra. Additionally, at each concentration, the sequence shown in FIG. 2 was performed, resulting in clean Raman spectra. The glucose concentrations derived from these clean Raman spectra are represented by the data points labelled "Data from Clean Spectra". Note that the predicted glucose concentration based on the clean spectra is nearly identical to the actual glucose concentration. Thus, this technique is effective in reducing the effects of background noise.

The present disclosure is not to be limited in scope by the specific embodiments described herein. Indeed, other various embodiments of and modifications to the present disclosure, in addition to those described herein, will be apparent to those of ordinary skill in the art from the foregoing description and accompanying drawings. Thus, such other embodiments and modifications are intended to fall within the scope of the present disclosure. Furthermore, although the present disclosure has been described herein in the context of a particular implementation in a particular environment for a particular purpose, those of ordinary skill in the art will recognize that its usefulness is not limited thereto and that the present disclosure may be beneficially implemented in any number of environments for any number of purposes. Accordingly, the claims set forth below should be construed in view of the full breadth and spirit of the present disclosure as described herein.

**Claims**

1. A method of measuring Raman scattering, comprising:

    performing one or more noise acquisition measurements using a Raman analyzer, wherein the one or more noise acquisition measurements are performed while a laser within the Raman analyzer is disabled;
    performing one or more Raman signal acquisition measurements to create a Raman spectrum, wherein the Raman signal acquisition measurement is performed while the laser within the Raman analyzer is enabled;
    averaging the one or more noise acquisition measurements to create an average background noise spectrum; and
    processing the average background noise spectrum and the Raman spectrum to create a clean Raman spectrum.

2. The method of claim 1, wherein the average background noise spectrum is subtracted from the Raman spectrum to crate the clean Raman spectrum.

3. The method of claim 1, wherein more than one Raman signal acquisition measurement is performed and results from the more than one Raman signal acquisition measurements are averaged to create the Raman spectrum.

4. The method of claim 1, wherein at least one of the one or more noise acquisition measurements is performed before the Raman signal acquisition measurement.

5. The method of claim 1, wherein at least one of the one or more noise acquisition measurements is performed after the Raman signal acquisition measurement.

6. The method of claim 1, wherein more than one noise acquisition measurement is performed, and at least one of the noise acquisition measurements is performed before the Raman signal acquisition measurement and at least one of the noise acquisition measurements is performed after the Raman signal acquisition measurement.

7. A system for measuring Raman scattering, comprising:

    an optical Raman probe sensor;
    a Raman analyzer, comprising an optical detector and a laser, the Raman analyzer in communication with the optical Raman probe sensor via a conduit; and
    a controller, wherein the controller:

        disables the laser and performs one or more noise acquisition measurements;
        enables the laser and performs one or more Raman signal acquisition measurements to generate a Raman spectrum;
        averages the one or more noise acquisition measurements to generate a noise spectrum; and
        processes the noise spectrum and the Raman spectrum to create a clean Raman spectrum.

8. The system of claim 7, wherein the controller subtracts the noise spectrum from the Raman spectrum to create the clean Raman spectrum.

9. The system of claim 7, wherein more than one Raman signal acquisition measurements are performed and the controller averages results from the more than one Raman signal acquisition measurements to create the Raman spectrum.

10. The system of claim 7, wherein the controller performs at least one of the one or more noise acquisition measurements before the Raman signal acquisition measurement.

11. The system of claim 7, wherein the controller performs at least one of the one or more noise acquisition measurements after the Raman signal acquisition measurement.

12. The system of claim 7, wherein the controller performs more than one noise acquisition measurement, and at least one of the noise acquisition measurements is performed before the Raman signal acquisition measurement and at least one of the noise acquisition measurements is performed after the Raman signal acquisition measurement.

FIG. 1

PERFORM ONE OR MORE BACKGROUND NOISE ACQUISITION MEASUREMENTS ⌐100

PERFORM RAMAN ACQUISITION MEASUREMENT TO CREATE RAMAN SPECTRUM ⌐110

PERFORM ONE OR MORE BACKGROUND NOISE ACQUISITION MEASUREMENTS ⌐120

AVERAGE BACKGROUND ACQUISITION MEASUREMENTS TO CREATE AVERAGE BACKGROUND NOISE SPECTRUM ⌐130

PROCESS AVERAGE BACKGROUND NOISE SPECTRUM AND RAMAN SPECTRUM TO CREATE CLEAN RAMAN SPECTRUM ⌐140

SET NEW CHANNEL ⌐150

FIG. 2

FIG. 3

Europäisches Patentamt

European Patent Office

Office européen des brevets

## EUROPEAN SEARCH REPORT

**Application Number**

EP 23 30 5149

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2019/080013 A1 (CLOUDMINDS SHENZHEN HOLDINGS CO LTD [CN]) 2 May 2019 (2019-05-02) * the whole document * | 1-12 | INV. G01N21/65 |
| X | RU 2 717 160 C1 (ROSSIJSKAYA FEDERATSIYA OT IMENI KOTOROJ VYSTUPAET FOND PERSPEKTIVNYKH) 18 March 2020 (2020-03-18) * the whole document * | 1-12 | |
| X | US 2014/271372 A1 (GRABBE ALEXIS [US] ET AL) 18 September 2014 (2014-09-18) * paragraphs [0025]-[0119]; in partricular, paragraphs [0095]-[0110]; figures * | 1-12 | |

TECHNICAL FIELDS SEARCHED (IPC)

G01N

The present search report has been drawn up for all claims

| Place of search | Date of completion of the search | Examiner |
|---|---|---|
| Munich | 9 June 2023 | Politsch, Erich |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
............................................................................
& : member of the same patent family, corresponding document

EPO FORM 1503 03.82 (P04C01)

**EP 4 411 349 A1**

## ANNEX TO THE EUROPEAN SEARCH REPORT
## ON EUROPEAN PATENT APPLICATION NO.

EP 23 30 5149

This annex lists the patent family members relating to the patent documents cited in the above-mentioned European search report.
The members are as contained in the European Patent Office EDP file on
The European Patent Office is in no way liable for these particulars which are merely given for the purpose of information.

09-06-2023

| Patent document cited in search report | | | Publication date | Patent family member(s) | | Publication date |
|---|---|---|---|---|---|---|
| WO 2019080013 | A1 | | 02-05-2019 | CN 107980093 A | | 01-05-2018 |
| | | | | WO 2019080013 A1 | | 02-05-2019 |
| RU 2717160 | C1 | | 18-03-2020 | NONE | | |
| US 2014271372 | A1 | | 18-09-2014 | CN 105228738 A | | 06-01-2016 |
| | | | | EP 2969173 A1 | | 20-01-2016 |
| | | | | KR 20150128913 A | | 18-11-2015 |
| | | | | TW 201501795 A | | 16-01-2015 |
| | | | | US 2014271372 A1 | | 18-09-2014 |
| | | | | US 2016158721 A1 | | 09-06-2016 |
| | | | | WO 2014160396 A1 | | 02-10-2014 |

EPO FORM P0459

For more details about this annex : see Official Journal of the European Patent Office, No. 12/82